# EUROPÄISCHE PATENTSCHRIFT

(11) **EP 3 924 233 B1**
(45) Veröffentlichungstag und Bekanntmachung des Hinweises auf die Patenterteilung: **16.11.2022**
(21) Anmeldenummer: 20704458.7
(22) Anmeldetag: 04.02.2020
(51) Int. Cl.: B60T 13/36, F15B 21/048

(54) **DRUCKLUFTBREMSANLAGE EINES KRAFTFAHRZEUGS**
COMPRESSED-AIR BRAKING SYSTEM FOR A MOTOR VEHICLE
SYSTÈME DE FREINAGE À AIR COMPRIMÉ D'UN VÉHICULE AUTOMOBILE

(30) Priorität: 13.02.2019 DE 102019103661
(43) Veröffentlichungstag der Anmeldung: 22.12.2021
(73) Patentinhaber: ZF CV Systems Europe BV, 1170 Brussels (BE)
(72) Erfinder: KLOOS, Eugen, 68519 Viernheim (DE)
(74) Vertreter: Copi, Joachim
(86) Internationale Anmeldenummer: PCT/EP2020/052712
(87) Internationale Veröffentlichungsnummer: WO 2020/164963

(56) Entgegenhaltungen:
- WO-A1-2016/026577
- WO-A1-2016/128417
- DE-A1-102016 124 253
- GB-A- 1 416 204

## Beschreibung

Die Erfindung betrifft eine Druckluftbremsanlage eines Kraftfahrzeugs, die eine Druckluftversorgungseinrichtung mit einem Kompressor sowie mehrere über ein Mehrkreisschutzventil an die Druckluftversorgungseinrichtung angeschlossene Bremskreise aufweist, darunter wenigstens ein Feststellbremskreis mit Feststellbremszylindern.

Mit der zunehmenden Umstellung der Fahrzeugantriebe von Verbrennungsmotoren auf Hybrid- und Elektroantriebe treten die Betriebsgeräusche von Nebenaggregaten und Systemeinrichtungen zunehmend in den Vordergrund, denn sie werden sowohl von den Fahrzeuginsassen als auch von externen Passanten als unangenehm und störend empfunden. Bei einer Druckluftbremsanlage eines Kraftfahrzeugs sind neben den Betriebsgeräuschen des Kompressors besonders die beim Ablassen von Druckluft aus den Bremszylindern auftretenden Geräusche als relevante Lärmquellen zu nennen.

Während die Betriebsbremszylinder der Betriebsbremskreise im normalen Fahrbetrieb, also bei normaler Betätigung des Motorwagenbremsventils zum Abbremsen des Kraftfahrzeugs, mit einem relativ niedrigen Druck von maximal 1,5 × 10⁵ Pa belüftet werden, tritt in den Feststellbremszylindern des Feststellbremskreises beim Lösen der Feststellbremse regelmäßig ein Spitzendruck von 7 × 10⁵ Pa bis 8,5 × 10⁵ Pa auf.

Wenn Bremszylinder mit einem Druck von mehr als 1,9 × 10⁵ Pa belüftet und danach in die Umgebung entlüftet werden, erreicht die Strömung im engsten Querschnitt des Strömungskanals die Schallgeschwindigkeit, welches bei einem unmittelbaren Austritt der Druckluft in die Umgebung mit einem vergleichsweise lautem Geräusch verbunden ist. Aufgrund des niedrigen Betätigungsdruckes sind die beim Lösen der Betriebsbremse, also beim Entlüften der Betriebsbremszylinder der Betriebsbremskreise, auftretenden Geräusche relativ schwach und treten zudem zumeist während der Fahrt auf. Dagegen sind die beim Betätigen der Feststellbremse, also beim Entlüften der Feststellbremszylinder des Feststellbremskreises, auftretenden Zischgeräusche aufgrund des deutlich höheren Druckniveaus wesentlich stärker und treten zudem nur bei Fahrzeugstillstand auf. Bei Fahrzeugherstellern und deren Kunden besteht daher ein starkes Interesse daran, die beim Betätigen der Feststellbremse durch das Entlüften der Feststellbremszylinder auftretenden Betriebsgeräusche zu reduzieren.

Für den Bereich der Personenkraftwagen sind Luftfederungsanlagen mit einem geschlossenen Druckluftkreis bekannt. Bei diesen Luftfederungsanlagen erfolgt die Entlüftung der Luftfedern nicht in die Umgebung, sondern in einen Vorratsbehälter oder einen zusätzlichen Speicherbehälter, der mit einem Ansaugraum oder Ansaugbehälter des Kompressors verbindbar ist. Derartige Luftfederungsanlagen dienen im Wesentlichen zur Energieeinsparung, weil der Kompressor dadurch seltener und weniger lang betrieben wird, da die in dem betreffenden Behälter unter einem Restdruck stehende Druckluft zur Belüftung der Luftfedern oder als Ansaugluft des Kompressors genutzt wird. Als Nebeneffekt ergeben sich durch den geschlossenen Druckluftkreis jedoch auch relativ niedrige Betriebsgeräusche dieser Luftfederungsanlagen. Entsprechende Luftfederungsanlagen sind beispielsweise in der DE 100 55 108 A1 und der DE 10 2016 124 253 A1 beschrieben.

Da ein derartiger geschlossener Druckluftkreis nicht ohne weiteres auf eine Druckluftbremsanlage eines Nutzfahrzeugs mit mindestens zwei Betriebsbremskreisen, einem Feststellbremskreis und einem Nebenverbraucherkreis übertragbar ist, lag der vorliegenden Erfindung die Aufgabe zugrunde, bei einer Druckluftbremsanlage eines Kraftfahrzeugs der eingangs genannten Art die erwähnten Betriebsgeräusche zu reduzieren.

Diese Aufgabe ist durch eine Druckluftbremsanlage mit den Merkmalen des Anspruchs 1 gelöst. Vorteilhafte Ausgestaltungen und Weiterbildungen dieser Druckluftbremsanlage sind in den abhängigen Ansprüchen definiert.

Die Erfindung betrifft demnach eine Druckluftbremsanlage eines Kraftfahrzeugs, die eine Druckluftversorgungseinrichtung mit einem Kompressor sowie mehrere über ein Mehrkreisschutzventil an die Druckluftversorgungseinrichtung angeschlossene Bremskreise aufweist, darunter wenigstens ein Feststellbremskreis mit Feststellbremszylindern. Gemäß der Erfindung ist bei dieser Druckluftbremsanlage vorgesehen, dass die Feststellbremszylinder pro Rad oder pro Fahrzeugachse jeweils über ein an eine Verbindungsleitung angeschlossenes Schnellentlüftungsventil sowie ein diesem nachgeordnetes Umschaltventil wechselweise entweder in die umgebende Atmosphäre oder in einen zusätzlichen Speicherbehälter entlüftbar sind.

Durch den radindividuellen oder achsweisen Entlüftungsweg der betreffenden Feststellbremszylinder über ein Schnellentlüftungsventil und ein Umschaltventil in die Umgebung oder in einen zusätzlichen Speicherbehälter ist die Möglichkeit gegeben, die Feststellbremszylinder wechselweise bei Vorliegen eines niedrigen Betätigungsdruckes unmittelbar in die Umgebung oder bei Vorliegen eines höheren Betätigungsdruckes intern in den zusätzlichen Speicherbehälter zu entlüften. In beiden Fällen erfolgt das Entlüften der Feststellbremszylinder mit einem niedrigen Geräuschpegel. Somit ist mit geringem Mehraufwand, der für jede mit Feststellbremszylindern ausgerüstete Fahrzeugachse ein Schnellentlüftungsventil und ein Umschaltventil sowie jeweils einen separaten oder einen gemeinsamen Speicherbehälter umfasst, die Möglichkeit gegeben, die Betriebsgeräusche der Druckluftbremsanlage beim Betätigen der Feststellbremse deutlich zu reduzieren.

Die achsbezogene Variante kann im Vergleich mit der radindividuellen Variante als vorteilhafter angesehen werden, denn die achsbezogene Variante benötigt für alle an einer Fahrzeugachse angeordnete Feststellbremszylinder nur ein Schnellentlüftungsventil und nur ein Umschaltventil. Hierdurch lassen sich Herstell- und Montagekosten einsparen.

Schnellentlüftungsventile sind beispielsweise aus der DE 10 2015 102 127 A1 an sich bekannt und werden bei Kraftfahrzeugen mit langen Bremsleitungen sowie großvolumigen Betriebsbremszylindern zum schnellen Lösen der Betriebsbremse eingesetzt.

Für die erfindungsgemäße Druckluftbremsanlage wird ein Schnellentlüftungsventil vorgeschlagen, das einen Eingangsanschluss, einen Arbeitsanschluss und einen Ausgangsanschluss aufweist, wobei der Eingangsanschluss über eine Druckleitung mit dem Ausgangsanschluss eines von einem Handbremsventil ansteuerbaren Relaisventils verbunden ist, wobei der Arbeitsanschluss über die Verbindungsleitung mit den Feststellbremszylindern verbunden ist, und wobei der Ausgangsanschluss über eine Ausgangsleitung mit einem Eingangsanschluss des Umschaltventils verbunden ist. In dem Schnellentlüftungsventil ist der Arbeitsanschluss bei hohem Druck in der eingangsseitigen Druckleitung mit dem Eingangsanschluss verbunden und bei niedrigem Druck ist der eingangsseitigen Druckleitung beziehungsweise bei druckloser Druckleitung mit dem Ausgangsanschluss verbunden.

Das Umschaltventil könnte als ein 3/2-Wege-Magnetschaltventil ausgebildet und somit aktiv steuerbar sein, was aber nachteilig mindestens einen an die Verbindungsleitung angeschlossenen Drucksensor erfordern würde, um das Umschaltventil abhängig von dem in den Feststellbremszylindern vorliegenden Betätigungsdruck umschalten zu können. Zudem wäre ein elektronisches Steuergerät erforderlich, um das Sensorsignal des Drucksensors auszuwerten und das Umschaltventil anzusteuern.

Daher ist gemäß einer Weiterbildung der Druckluftbremsanlage vorgesehen, dass das Umschaltventil als ein druckgesteuertes 3/2-Wege-Schaltventil mit einem Steuerdruckeingang, einem Eingangsanschluss und zwei Ausgangsanschlüssen ausgebildet ist, dessen Eingangsanschluss im unbetätigten Ruhezustand mit dem ersten Ausgangsanschluss und im umgeschalteten Zustand mit dem zweiten Ausgangsanschluss verbunden ist. Bei diesem Umschaltventil ist zudem der Steuerdruckeingang mit dem Eingangsanschluss verbunden, führt der erste Ausgangsanschluss in die umgebende Atmosphäre, und ist der zweite Ausgangsanschluss mit dem Speicherbehälter verbunden. Das Umschaltventil ist somit selbsttätig wirksam, wobei die Umschaltung des Umschaltventils abhängig von dem in den zugeordneten Feststellbremszylindern wirksamen Druck erfolgt, der über die Verbindungsleitung und das Schnellentlüftungsventil auch an dem Steuerdruckeingang des Umschaltventils anliegt.

Um eine Reduzierung der Betriebsgeräusche beim Ablassen von Druckluft zu erreichen, weist eine Ventilfeder des Umschaltventils bevorzugt eine derartige Federsteifigkeit und/oder eine derart eingestellte Vorspannung auf, dass der Eingangsanschluss unterhalb eines vorgegebenen, an dem Steuerdruckeingang anliegenden Umschaltdruckes mit dem ersten Ausgangsanschluss und bei Erreichen oder Überschreiten des Umschaltdruckes mit dem zweiten Ausgangsanschluss verbunden wird.

Der Umschaltdruck des Umschaltventils ist auf denjenigen Wert eingestellt, ab dem die ausströmende Druckluft im engsten Querschnitt des Luftaustritts der Feststellbremszylinder die Schallgeschwindigkeit erreicht. Dieser Wert des Umschaltdrucks kann beispielsweise im Bereich zwischen 1,9 × 10⁵ Pa und 2,5 × 10⁵ Pa einschließlich der Bereichsgrenzen liegen. Der engste Querschnitt des Luftaustritts befindet sich bei den bekannten Feststellbremszylindern unmittelbar am äußeren Rand des Luftaustritts, so dass bei Erreichen oder Überschreiten des kritischen Druckwertes beim Ablassen der Druckluft in die Umgebung ein maximaler Geräuschpegel erreicht wird.

Um auch beim Ablassen von Druckluft über das Umschaltventil in die Umgebung einen niedrigen Geräuschpegel zu erreichen, ist der engste Querschnitt des Luftaustritts am ersten Ausgangsanschluss des Umschaltventils vorteilhaft um den Faktor 1,1 bis 2,5 größer als der engste Querschnitt des Luftaustritts der Feststellbremszylinder.

Zur möglichen Nutzung der in den zusätzlichen Speicherbehälter abgelassenen Druckluft ist der Speicherbehälter über eine Verbindungsleitung mit einem Ansaugbehälter des Kompressors verbunden. Zudem ist zur Absicherung gegen eine Abströmung von Druckluft in die Umgebung in einer Saugleitung, über die der Ansaugbehälter mit der Umgebung verbunden ist, vorzugsweise ein in Richtung der umgebenden Atmosphäre sperrendes Rückschlagventil angeordnet. Durch diese Anordnung wird erreicht, dass der Kompressor bei leerem Speicherbehälter über die Saugleitung Luft aus der Umgebung und bei gefülltem Speicherbehälter unter einem Restdruck stehende Druckluft über die Verbindungsleitung aus dem Speicherbehälter ansaugt. Wie Untersuchungen ergeben haben, kann durch das Ansaugen der Druckluft aus dem Speicherbehälter der Energieverbrauch des Kompressors um bis zu 13% reduziert werden.

Schließlich kann vorgesehen sein, dass die mit einem Schnellentlüftungsventil und einem Umschaltventil der beschriebenen Anordnung verbundenen Feststellbremszylinder an einem anhängerlosen Kraftfahrzeug und/oder an dessen Anhängerfahrzeug oder an dem hinteren Teil eines Gelenkbusses angeordnet sind.

Die Erfindung wird nachstehend anhand eines in der beigefügten Zeichnung dargestellten Ausführungsbeispiels näher erläutert. In der Zeichnung zeigt
Fig. 1 eine erfindungsgemäße Druckluftbremsanlage in einer schematischen Gesamtdarstellung,
Fig. 1a einen ersten vergrößerten Ausschnitt A aus der Fig. 1 in einer schematischen Darstellung,
Fig. 1b einen zweiten vergrößerten Ausschnitt B aus der Fig. 1 in einer schematischen Darstellung,
Fig. 2 Druckverläufe in Feststellbremszylindern und Druckbehältern der Druckluftbremsanlage gemäß Fig. 1 sowie der Betriebszustand eines Kompressors in einem Zeitdiagramm,
Fig. 3 einen Druckverlauf in Feststellbremszylindern und einen Strömungsgeschwindigkeitsverlauf am Luftaustritt der Feststellbremszylinder der Druckluftbremsanlage gemäß Fig. 1 in einem Zeitdiagramm,
Fig. 4 Druckverläufe in Feststellbremszylindern und einem Druckbehälter sowie Strömungsgeschwindigkeitsverläufe am Luftaustritt der Feststellbremszylinder sowie eines Umschaltventils der Druckluftbremsanlage gemäß Fig. 1 in einem Zeitdiagramm, und
Fig. 5 eine bekannte Druckluftbremsanlage in einer schematischen Gesamtdarstellung, anhand der die Erfindung beispielhaft erläutert wird.

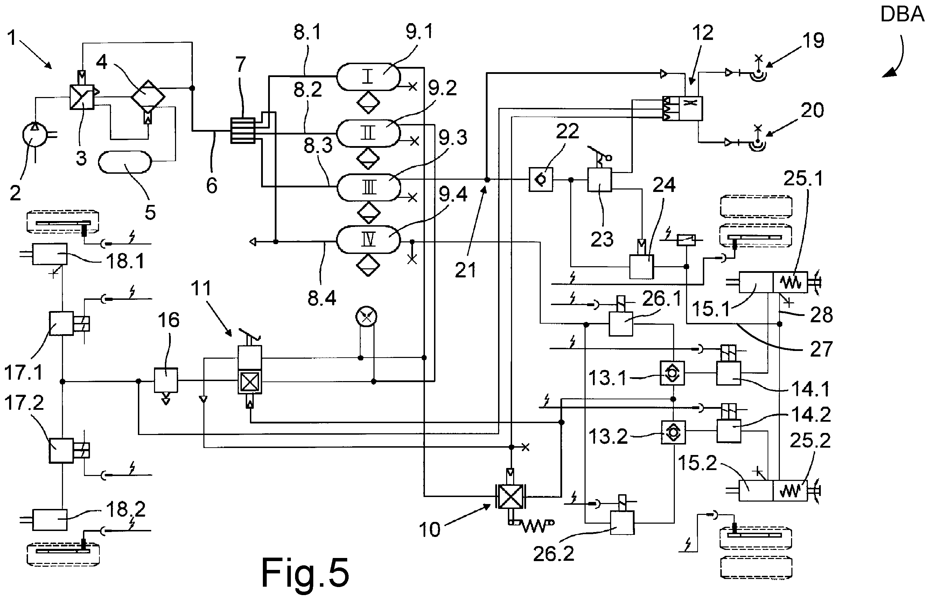

Die Erfindung wird nachfolgend beispielhaft anhand einer aus der DE 10 2013 000 275 A1 bekannten Druckluftbremsanlage DBA eines Motorwagens erläutert, die in Fig. 5 in einer schematischen Gesamtdarstellung abgebildet ist.

Die Druckluftbremsanlage DBA weist eine Druckluftversorgungseinrichtung 1 und mehrere über ein Mehrkreisschutzventil 7 an die Druckluftversorgungseinrichtung 1 angeschlossene Bremskreise auf. Die Druckluftversorgungseinrichtung 1 umfasst einen Kompressor 2, einen Druckregler 3, einen Trockner 4 und einen Vorratsbehälter 5. Der Kompressor 2 ist von einem nicht abgebildeten Antriebsmotor des Motorwagens antreibbar und fördert im eingeschalteten beziehungsweise angekoppelten Zustand Druckluft aus der Umgebung über den Druckregler 3 und den Trockner 4 in eine Druckleitung 6. An den Trockner 4 ist auch der Vorratsbehälter 5 angeschlossen, in dem Druckluft zur bedarfsweise durchführbaren Regeneration des Trockners 4 gespeichert werden kann. An die Druckleitung 6 der Druckluftversorgungseinrichtung 1 sind über ein vorliegend als ein Vierkreisschutzventil ausgebildetes Mehrkreisschutzventil 7 vier Bremskreise mit jeweils einer Vorratsleitung 8.1, 8.2, 8.3, 8.4 angeschlossen. Diese sind zwei nicht druckbegrenzte Betriebsbremskreise, ein druckbegrenzter Anhängersteuer- und Feststellbremskreis sowie ein druckbegrenzter Betriebsbrems- und Nebenverbraucherkreis.

Die Vorratsleitung 8.1 des ersten Betriebsbremskreises führt über einen Vorratsbehälter 9.1 zu einem ALB-Regler 10 (ALB = automatisch lastabhängige Bremse) und zu einem Motorwagenbremsventil 11, von dem aus ein Steuerdruck zu dem ALB-Regler 10 und zu einem Anhängersteuerventil 12 geführt wird. Von dem ALB-Regler 10 wird die Druckluft über zwei Zweiwegeventile 13.1, 13.2 und zwei ABS-Magnetventile 14.1, 14.2 (ABS = Antiblockiersystem) zu den Betriebsbremszylindern 15.1, 15.2 der Radbremsen an der Hinterachse des Motorwagens geführt. Ein zwischen dem ALB-Regler 10 und den beiden Zweiwegeventilen 13.1, 13.2 abgegriffener Steuerdruck wird über eine Steuerleitung an einen Steuerdruckeingang des Motorwagenbremsventils 11 geführt.

Die Vorratsleitung 8.2 des zweiten Betriebsbremskreises führt über einen Vorratsbehälter 9.2 zu dem Motorwagenbremsventil 11 und von dort über ein Schnellentlüftungsventil 16 und zwei ABS-Magnetventile 17.1, 17.2 zu den Betriebsbremszylindern 18.1, 18.2 der Radbremsen an der Vorderachse des Motorwagens. Ein zwischen dem Schnellentlüftungsventil 16 und den beiden ABS-Magnetventilen 17.1, 17.2 abgegriffener Steuerdruck wird über eine Steuerleitung an einen Steuerdruckeingang des Anhängersteuerventils 12 geführt.

Die Vorratsleitung 8.3 des Anhängersteuer- und Feststellbremskreises führt über einen Vorratsbehälter 9.3 und das Anhängersteuerventil 12 zu einem Kupplungskopf "Vorrat" 19, der zum Anschluss der Vorratsleitung der Druckluftbremsanlage eines Anhängers dient. Von dem Anhängersteuerventil 12 führt zudem eine Steuerleitung zu einem Kupplungskopf "Bremse" 20, der zum Anschluss der Bremssteuerleitung der Druckluftbremsanlage des Anhängers dient. Zwischen dem Vorratsbehälter 9.3 und dem Anhängersteuerventil 12 weist die Vorratsleitung 8.3 einen Abzweig 21 auf, der über ein Rückschlagventil 22 zu einem Handbremsventil 23 und einem Relaisventil 24 führt. Von dem Handbremsventil 23, das zur manuellen Betätigung der Feststellbremse dient, sind eine Steuerleitung zu dem Anhängersteuerventil 12 und eine Steuerleitung zu dem Relaisventil 24 geführt. Bei betätigtem Handbremsventil 23 wird Druckluft der Vorratsleitung 8.3 durch das Relaisventil 24 über eine Druckleitung 27 und eine Verbindungsleitung 28 zu den Feststellbremszylindern 25.1, 25.2 der Radbremsen an der Hinterachse des Motorwagens geführt, wodurch die durch Federspeicher eingelegte Feststellbremse gelöst wird.

Die Vorratsleitung 8.4 des Betriebsbrems- und Nebenverbraucherkreises führt einerseits über einen Vorratsbehälter 9.4 und zwei ASR-Bremsventile 26.1, 26.2 (ASR = Antischlupfregelung), die beiden Zweiwegeventile 13.1, 13.2 und die beiden ABS-Magnetventile 14.1, 14.2 zu den Betriebsbremszylindern 15.1, 15.2 der Radbremsen an der Hinterachse des Motorwagens. Andererseits führt die Vorratsleitung 8.4 des Betriebsbrems- und Nebenverbraucherkreises zu nicht näher dargestellten Nebenverbrauchern.

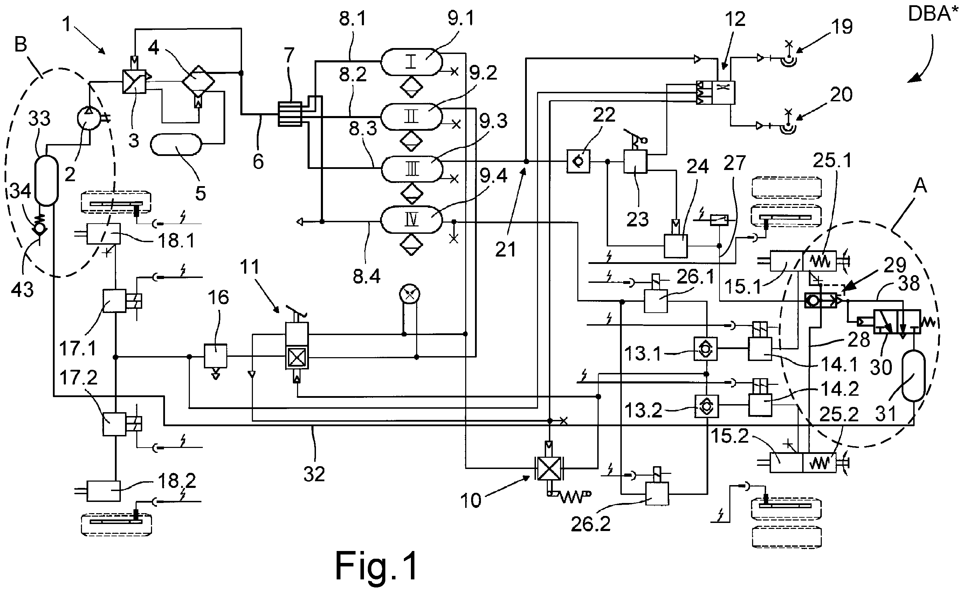

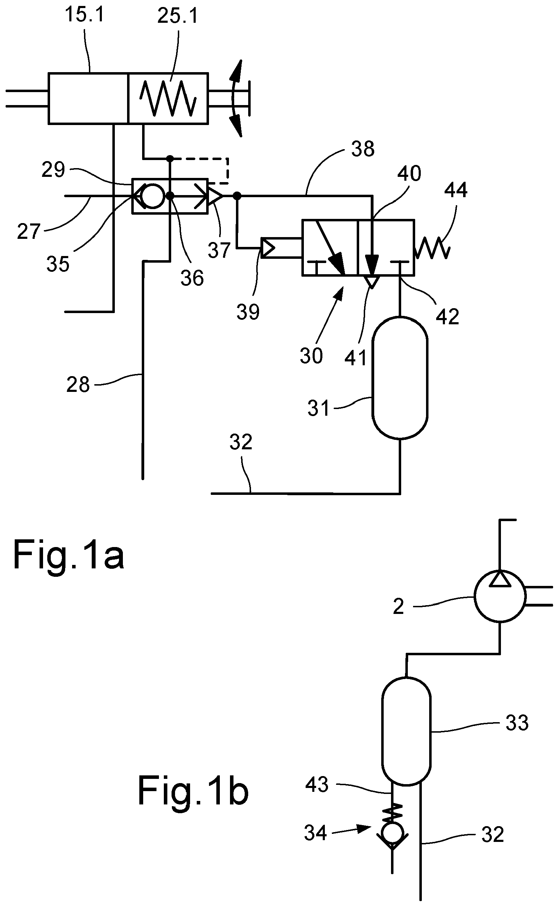

In der schematischen Gesamtdarstellung der Fig. 1 ist eine erfindungsgemäße Druckluftbremsanlage DBA* abgebildet, die durch eine Erweiterung der bekannten Druckluftbremsanlage DBA gemäß Fig. 5 mit einigen Bauteilen gebildet ist. Wie der Fig. 1 im Bereich der Hinterachse und dem in Fig. 1a vergrößert abgebildeten Ausschnitt A von Fig. 1 zu entnehmen ist, sind dem Feststellbremskreis nun zusätzlich ein Schnellentlüftungsventil 29, ein Umschaltventil 30 und ein zusätzlicher Speicherbehälter 31 zugeordnet.

Wie Fig. 1a veranschaulicht, weist das Schnellentlüftungsventil 29 einen Eingangsanschluss 35, einen Arbeitsanschluss 36 und einen Ausgangsanschluss 37 auf. Der Eingangsanschluss 35 ist über die Druckleitung 27 mit dem Ausgangsanschluss des von dem Handbremsventil 23 ansteuerbaren Relaisventils 24 verbunden. Der Arbeitsanschluss 36 ist über die erwähnte Verbindungsleitung 28 mit den Feststellbremszylindern 25.1, 25.2 verbunden. Der Ausgangsanschluss 37 ist über eine Ausgangsleitung 38 mit einem Eingangsanschluss 40 des Umschaltventils 30 verbunden. In dem Schnellentlüftungsventil 29 ist der Arbeitsanschluss 36 bei hohem Druck in der eingangsseitigen Druckleitung 27 mit dem Eingangsanschluss 36 verbunden und bei niedrigem Druck in der eingangsseitigen Druckleitung 27 beziehungsweise bei druckloser Druckleitung 27 mit dem Ausgangsanschluss 37 verbunden.

Das Umschaltventil 30 ist als ein druckgesteuertes 3/2-Wege-Schaltventil mit einem Steuerdruckeingang 39, einem Eingangsanschluss 40 und zwei Ausgangsanschlüssen 41, 42 ausgebildet. Der Eingangsanschluss 40 des Umschaltventils 30 ist im dargestellten unbetätigten Ruhezustand mit dem ersten Ausgangsanschluss 41 und im umgeschalteten Zustand mit dem zweiten Ausgangsanschluss 42 verbunden. Der Steuerdruckeingang 39 ist mit dem Eingangsanschluss 40 verbunden. Der erste Ausgangsanschluss 41 führt in die umgebende Atmosphäre, und der zweite Ausgangsanschluss 42 ist mit dem Speicherbehälter 31 verbunden. Eine Ventilfeder 44 des Umschaltventils 30 weist eine derartige Federsteifigkeit und/oder eine derart eingestellte Vorspannung auf, dass der Eingangsanschluss 40 unterhalb eines vorgegebenen, an dem Steuerdruckeingang 39 anliegenden Umschaltdruckes p_{S} mit dem ersten Ausgangsanschluss 41 und bei Erreichen oder Überschreiten des Umschaltdruckes p_{S} mit dem zweiten Ausgangsanschluss 42 verbunden wird. Der Umschaltdruck p_{S} des Umschaltventils 30 ist auf einen Wert im Bereich zwischen 1,9 × 10⁵ Pa und 2,5 × 10⁵ Pa einschließlich der Bereichsgrenzen eingestellt, ab dem die ausströmende Druckluft im engsten Querschnitt des Luftaustritts der Feststellbremszylinder 25.1, 25.2 die Schallgeschwindigkeit erreicht.

Mit der beschriebenen Anordnung des Schnellentlüftungsventils 29, des Umschaltventils 30 und des Speicherbehälters 31 wird erreicht, dass die Feststellbremszylinder 25.1, 25.2 der Feststellbremse an der Hinterachse des Motorfahrzeugs bei druckabgesenkter oder druckloser Druckleitung 27 über das Schnellentlüftungsventil 29 und das Umschaltventil 30 bei Unterschreitung des Umschaltdruckes p_{S} in den Feststellbremszylindern 25.1, 25.2 in die umgebende Atmosphäre und bei Erreichen oder Überschreiten des Umschaltdruckes p_{S} in den Feststellbremszylindern 25.1, 25.2 intern in den Speicherbehälter 31 entlüftet werden. Dadurch wird der Lärmpegel beim Ablassen der Druckluft aus den Feststellbremszylindern 25.1, 25.2 deutlich reduziert, so dass die betreffenden Zischgeräusche im Umgebungslärm untergehen und nicht mehr als störend wahrgenommen werden.

Wie der Fig. 1 im Bereich der Druckluftversorgungseinrichtung 1 und dem in Fig. 1b vergrößert abgebildeten Ausschnitt B von Fig. 1 zu entnehmen ist, ist dem Kompressor 2 über eine Verbindungsleitung ein Ansaugbehälter 33 zugeordnet, welcher einerseits über eine Verbindungsleitung 32 mit dem hinterachsseitigen Speicherbehälter 31 und andererseits über eine Saugleitung 43 mit der Umgebung verbunden ist. Zur Absicherung gegen eine Abströmung von Druckluft in die Umgebung ist in der Saugleitung 43 ein in Richtung der umgebenden Atmosphäre sperrendes Rückschlagventil 34 angeordnet. Durch diese Anordnung wird erreicht, dass der Kompressor 2 bei leerem hinterachsseitigen Speicherbehälter 31 über die Saugleitung 43 Luft aus der Umgebung und bei gefülltem hinterachsseitigen Speicherbehälter 31 unter einem Restdruck stehende Druckluft über die Verbindungsleitung 32 aus diesem Speicherbehälter 31 ansaugt. Durch das Ansaugen der Druckluft aus dem hinterachsseitigen Speicherbehälter 31 kann der Energieverbrauch des Kompressors 2 um bis zu 13% reduziert werden.

Einen etwas komplexeren Aufbau würde eine die Merkmale der Erfindung aufweisende Druckluftbremsanlage DBA* haben, wenn diese abweichend von Fig. 1 für jeden Feststellbremszylinder 25.1, 25.2 ein Schnellentlüftungsventil 29 sowie ein Umschaltventil 30 aufweisen würde. Sie würde aber ebenso funktionieren.

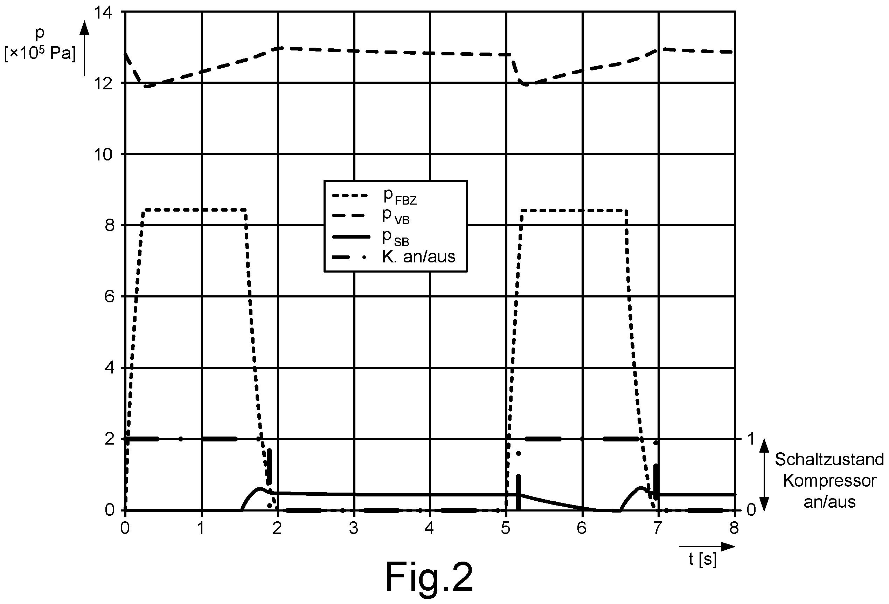

Nachfolgend wird die Wirkungsweise der erfindungsgemäßen Druckluftbremsanlage DBA* gemäß Fig. 1 beim Ablassen von Druckluft aus den Feststellbremszylindern 25.1, 25.2 anhand von drei in den Figuren 2 bis 4 abgebildeten Zeitdiagrammen erläutert, deren Kurven mittels einer numerischen Simulation ermittelt wurden.

In dem Diagramm der Fig. 2 sind die Zeitverläufe des Druckes p_{FBZ} in den Feststellbremszylindern 25.1, 25.2, des Druckes p_{VB} in dem zugeordneten Vorratsbehälter 9.3, des Druckes p_{SB} in dem zusätzlichen hinterachsseitigen Speicherbehälter 31 sowie des Schaltzustandes K des Kompressors 2 (0 = Kompressor abgeschaltet, 1 = Kompressor eingeschaltet) über einen Zeitraum von t = 0 s bis t = 8 s abgebildet.

In einer ersten Sequenz im Zeitabschnitt t = 0 s bis etwa t = 2 s ist der hinterachsseitige Speicherbehälter 31 leer, das heißt, dass der Druck p_{SB} in dem hinterachsseitigen Speicherbehälter 31 beträgt 0 Pa. Durch eine Betätigung des Handbremsventils 23 zum Lösen der Feststellbremse im Zeitpunkt t = 0 werden die Feststellbremszylinder 25.1, 25.2 belüftet, so dass deren Druck p_{FBZ} auf etwa 8,5 × 10⁵ Pa ansteigt. Zugleich sinkt der Druck p_{VB} in dem Vorratsbehälter 9.3 unter einen Einschaltdruck ab, so dass der Kompressor 2 eingeschaltet wird und Luft über die Saugleitung 43 aus der Umgebung ansaugt (Schaltzustand Kompressor = 1). Hierdurch steigt der Druck p_{VB} in dem Vorratsbehälter 9.3 im weiteren zeitlichen Verlauf wieder an.

Zum Zeitpunkt von etwa t = 1,6 s wird das Handbremsventil 23 zum Einlegen der Feststellbremse erneut betätigt, wodurch die Druckluft aus den Feststellbremszylindern 25.1, 25.2 abgelassen wird. Da der Druck p_{FBZ} in den Feststellbremszylindern 25.1, 25.2 mit 8,5 × 10⁵ Pa deutlich über dem Umschaltdruck p_{S} des Umschaltventils 30 liegt, wird das Umschaltventil 30 umgeschaltet und die Druckluft strömt aus den Feststellbremszylindern 25.1, 25.2 über das Schnellentlüftungsventil 29 und das Umschaltventil 30 in den hinterachsseitigen Speicherbehälter 31, wodurch der Druck p_{SB} in diesem Speicherbehälter 31 auf etwa 0,45 × 10⁵ Pa ansteigt. Mit Erreichen eines Abschaltdruckes durch den Druck p_{VB} in dem Vorratsbehälter 9.3 zum Zeitpunkt von etwa t = 1,85 s wird der Kompressor 2 wieder abgeschaltet (Schaltzustand Kompressor = 0).

In einer zweiten Sequenz im Zeitabschnitt t = 5 s bis t = 7 s wird zunächst zum Zeitpunkt t = 5 s das Handbremsventil 23 zum Lösen der Feststellbremse betätigt, wodurch die Feststellbremszylinder 25.1, 25.2 belüftet werden und deren Druck p_{FBZ} auf etwa 8,5 × 10⁵ Pa ansteigt. Dadurch sinkt der Druck p_{VB} in dem Vorratsbehälter 9.3 unter den Einschaltdruck ab, so dass der Kompressor 2 zum Zeitpunkt von etwa t = 5,2 s eingeschaltet wird (Schaltzustand Kompressor = 1). Der Kompressor 2 saugt zunächst die unter einem Restdruck von 0,45 × 10⁵ Pa stehende Luft aus dem hinterachsseitigen Speicherbehälter 31 an, bis dieser zum Zeitpunkt von etwa t = 6,5 s leer ist. Ab diesem Zeitpunkt saugt der Kompressor 2 über die Saugleitung 43 Luft aus der Umgebung an. Durch den Betrieb des Kompressors 2 steigt der Druck p_{VB} in dem Vorratsbehälter 9.3 weiter an.

Zum Zeitpunkt von etwa t = 6,7 s wird das Handbremsventil 23 zum Einlegen der Feststellbremse erneut betätigt, wodurch die Druckluft aus den Feststellbremszylindern 25.1, 25.2 abgelassen wird. Da der Druck p_{FBZ} in den Feststellbremszylindern 25.1, 25.2 mit 8,5 × 10⁵ Pa deutlich über dem Umschaltdruck p_{S} des Umschaltventils 30 liegt, wird das Umschaltventil 30 umgeschaltet und die Druckluft strömt aus den Feststellbremszylindern 25.1, 25.2 über das Schnellentlüftungsventil 29 und das Umschaltventil 30 in den hinterachsseitigen Speicherbehälter 31, wodurch der Druck p_{SB} in diesem Speicherbehälter 31 auf etwa 0,45 × 10⁵ Pa ansteigt. Mit Erreichen des Abschaltdruckes durch den Druck p_{VB} in dem Vorratsbehälter 9.3 zum Zeitpunkt von etwa t = 6,95 s wird der Kompressor 2 wieder abgeschaltet (Schaltzustand Kompressor = 1).

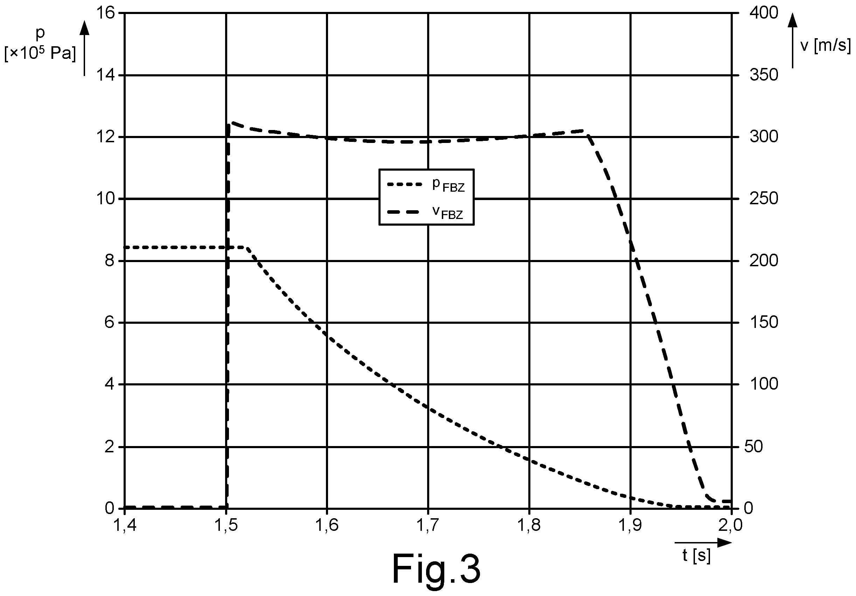

In dem Diagramm der Fig. 3 sind die Zeitverläufe des Druckes p_{FBZ} in den Feststellbremszylindern 25.1, 25.2 und der Strömungsgeschwindigkeit v_{FBZ} am Luftaustritt der Feststellbremszylinder 25.1, 25.2 über einen Zeitraum von t = 1,4 bis t = 2,0 s abgebildet.

Zunächst ist die Feststellbremse durch die Belüftung der Federspeicherbremszylinder 25.1, 25.2 gelöst und die Federspeicherbremszylinder 25.1, 25.2 stehen unter einem Druck von p_{FBZ} = 8,5 × 10⁵ Pa. Zum Zeitpunkt t = 1,5 s wird das Handbremsventil 23 zum Einlegen der Feststellbremse betätigt, wodurch die Federspeicherbremszylinder 25.1, 25.2 entlüftet werden und der Druck p_{FBZ} in den Federspeicherbremszylindern 25.1, 25.2 absinkt. Aufgrund des anfänglich hohen Druckes p_{FBZ} stellt sich bei der ausströmenden Druckluft im engsten Querschnitt am Luftaustritt der Feststellbremszylinder 25.1, 25.2 zunächst die Schallgeschwindigkeit von etwa v_{FBZ} = 300 m/s ein, welches bei einem unmittelbaren Luftaustritt in die Umgebung zu lauten und unangenehmen Geräuschen führt. Erst mit dem Absinken des Druckes p_{FBZ} in den Federspeicherbremszylindern 25.1, 25.2 nimmt ab dem Zeitpunkt von etwa t = 1,86 s auch die Strömungsgeschwindigkeit v_{FBZ} der ausströmenden Druckluft ab.

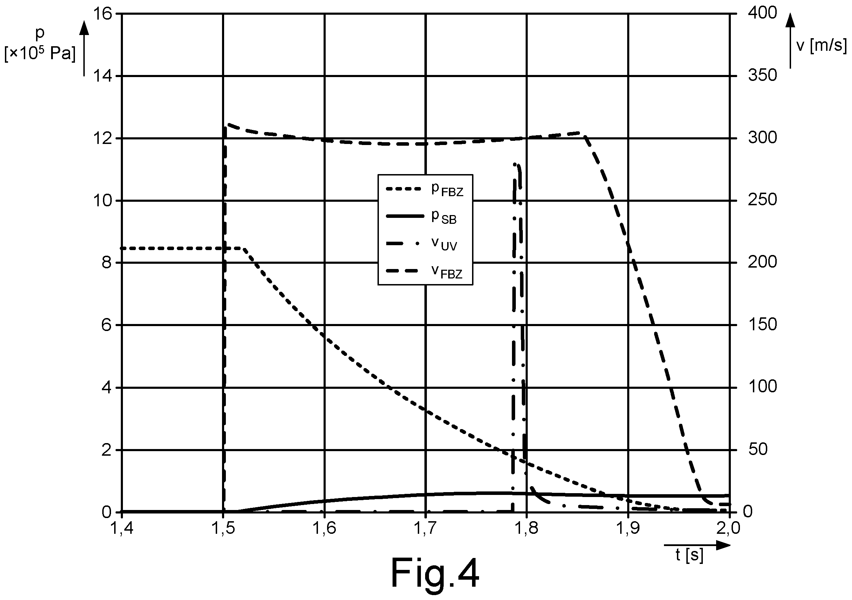

In dem Diagramm der Fig. 4 sind im Unterschied zu dem Diagramm von Fig. 3 zusätzlich zu den Zeitverläufen des Druckes p_{FBZ} in den Feststellbremszylindern 25.1, 25.2 und der Strömungsgeschwindigkeit v_{FBZ} am Luftaustritt der Feststellbremszylinder 25.1, 25.2 auch die Zeitverläufe des Druckes p_{SB} in dem zusätzlichen hinterachsseitigen Speicherbehälter 31 und der Strömungsgeschwindigkeit v_{UV} am ersten Ausgangsanschluss 41 des Umschaltventils 30 über einen Zeitraum von t = 1,4 bis t = 2,0 s abgebildet.

Solange der Druck p_{FBZ} in den Feststellbremszylindern 25.1, 25.2 beim Ablassen der Druckluft über dem Umschaltdruck p_{S} des Umschaltventils 30 liegt, ist das Umschaltventil 30 umgeschaltet und die Druckluft aus den Feststellbremszylindern 25.1, 25.2 strömt über das Schnellentlüftungsventil 29 und das Umschaltventil 30 in den Speicherbehälter 31, so dass der Druck p_{SB} in dem Speicherbehälter 31 auf etwa 0,45 × 10⁵ Pa ansteigt. Zum Zeitpunkt von etwa t = 1,78 s hat der Druck p_{FBZ} in den Feststellbremszylindern 25.1, 25.2 den Umschaltdruck p_{S} des Umschaltventils 30 unterschritten, so dass das Umschaltventil 30 in seine Ruhestellung umgeschaltet wird, und die Druckluft aus den Feststellbremszylindern 25.1, 25.2 dann über das Schnellentlüftungsventil 29 und das Umschaltventil 30 unmittelbar in die Umgebung austritt. Wie es in dem Diagramm der Fig. 4 dargestellt ist, kann sich während des Umschaltvorgangs des Umschaltventils 30 am ersten Ausgangsanschluss 41, der größer als der engste Querschnitt des Luftaustritts der Feststellbremszylinder 25.1, 25.2 ist, eine Sitze der Strömungsgeschwindigkeit v_{UV} mit einem kurzzeitigen Erreichen der Schallgeschwindigkeit einstellen. Durch das Ausströmen der anfänglich unter einem hohen Druck p_{FBZ} stehenden Druckluft in den hinterachsseitigen Speicherbehälter 31 wird der Lärmpegel beim Entlüften der Feststellbremszylinder 25.1, 25.2 deutlich reduziert.

### Bezugszeichenliste

- 1: Druckluftversorgungseinrichtung
- 2: Kompressor
- 3: Druckregler
- 4: Trockner
- 5: Vorratsbehälter
- 6: Druckleitung
- 7: Mehrkreisschutzventil, Vierkreisschutzventil
- 8.1,8.2: Vorratsleitung
- 8.3,8.4: Vorratsleitung
- 9.1,9.2: Vorratsbehälter
- 9.3,9.4: Vorratsbehälter
- 10: ALB-Regler (ALB = automatisch lastabhängige Bremse)
- 11: Motorwagenbremsventil
- 12: Anhängersteuerventil
- 13.1, 13.2: Zweiwegeventil
- 14.1, 14.2: ABS-Magnetventil
- 15.1, 15.2: Betriebsbremszylinder
- 16: Schnellentlüftungsventil
- 17.1, 17.2: ABS-Magnetventil
- 18.1, 18.2: Betriebsbremszylinder
- 19: Kupplungskopf "Vorrat"
- 20: Kupplungskopf "Bremse"
- 21: Abzweig
- 22: Rückschlagventil
- 23: Handbremsventil
- 24: Relaisventil
- 25.1, 25.2: Feststellbremszylinder
- 26.1, 26.2: ASR-Bremsventil
- 27: Druckleitung
- 28: Verbindungsleitung
- 29: Schnellentlüftungsventil
- 30: Umschaltventil
- 31: Hinterachsseitiger Speicherbehälter
- 32: Verbindungsleitung
- 33: Ansaugbehälter
- 34: Rückschlagventil
- 35: Eingangsanschluss
- 36: Arbeitsanschluss
- 37: Ausgangsanschluss
- 38: Ausgangsleitung
- 39: Steuerdruckeingang
- 40: Eingangsanschluss
- 41: Erster Ausgangsanschluss
- 42: Zweiter Ausgangsanschluss
- 43: Saugleitung
- 44: Ventilfeder des Umschaltventils 30
- A: Ausschnitt in Fig. 1
- B: Ausschnitt in Fig. 1
- p: Druck
- p_{FBZ}: Druck in Feststellbremszylindern (25.1, 25.2)
- p_{SB}: Druck in Speicherbehälter (31)
- p_{S}: Umschaltdruck von Umschaltventil (30)
- p_{VB}: Druck in Vorratsbehälter (9.3)
- t: Zeit
- v: Strömungsgeschwindigkeit
- v_{FBZ}: Strömungsgeschwindigkeit am Luftaustritt der Feststellbremszylinder
- v_{UV}: Strömungsgeschwindigkeit am ersten Ausgangsanschluss des Umschaltventils

## Patentansprüche

1. Druckluftbremsanlage (DBA*) eines Kraftfahrzeugs, die eine Druckluftversorgungseinrichtung (1) mit einem Kompressor (2) sowie mehrere über ein Mehrkreisschutzventil (7) an die Druckluftversorgungseinrichtung (1) angeschlossene Bremskreise aufweist, darunter wenigstens ein Feststellbremskreis mit Feststellbremszylindern (25.1, 25.2), **dadurch gekennzeichnet, dass** die Feststellbremszylinder (25.1, 25.2) pro Rad oder pro Fahrzeugachse jeweils über ein an eine Verbindungsleitung (28) angeschlossenes Schnellentlüftungsventil (29) sowie ein diesem nachgeordnetes Umschaltventil (30) wechselweise entweder in die umgebende Atmosphäre oder in einen zusätzlichen Speicherbehälter (31) entlüftbar sind.

2. Druckluftbremsanlage nach Anspruch 1, **dadurch gekennzeichnet, dass** das Schnellentlüftungsventil (29) einen Eingangsanschluss (35), einen Arbeitsanschluss (36) und einen Ausgangsanschluss (37) aufweist, wobei der Eingangsanschluss (35) über eine Druckleitung (27) mit dem Ausgangsanschluss eines von einem Handbremsventil (23) ansteuerbaren Relaisventils (24) verbunden ist, wobei der Arbeitsanschluss (36) über die Verbindungsleitung (28) mit den Feststellbremszylindern (25.1, 25.2) verbunden ist, und wobei der Ausgangsanschluss (37) über eine Ausgangsleitung (38) mit einem Eingangsanschluss (40) des Umschaltventils (30) verbunden ist.

3. Druckluftbremsanlage nach Anspruch 1 und 2, **dadurch gekennzeichnet, dass** das Umschaltventil (30) als ein druckgesteuertes 3/2-Wege-Schaltventil mit einem Steuerdruckeingang (39), einem Eingangsanschluss (40) und zwei Ausgangsanschlüssen (41, 42) ausgebildet ist, dessen Eingangsanschluss (40) im unbetätigten Ruhezustand mit dem ersten Ausgangsanschluss (41) und im umgeschalteten Zustand mit dem zweiten Ausgangsanschluss (42) verbunden ist, wobei der Steuerdruckeingang (39) mit dem Eingangsanschluss (40) verbunden ist, der erste Ausgangsanschluss (41) in die umgebende Atmosphäre führt, und der zweite Ausgangsanschluss (42) mit dem Speicherbehälter (31) verbunden ist.

4. Druckluftbremsanlage nach Anspruch 3, **dadurch gekennzeichnet, dass** eine Ventilfeder (44) des Umschaltventils (30) eine derartige Federsteifigkeit und/oder eine derart eingestellte Vorspannung aufweist, dass der Eingangsanschluss (40) unterhalb eines vorgegebenen, an dem Steuerdruckeingang (39) anliegenden Umschaltdruckes (p_{S}) mit dem ersten Ausgangsanschluss (41) und bei Erreichen oder Überschreiten des Umschaltdruckes (p_{S}) mit dem zweiten Ausgangsanschluss (42) verbunden wird.

5. Druckluftbremsanlage nach Anspruch 4, **dadurch gekennzeichnet, dass** der Umschaltdruck (p_{S}) des Umschaltventils (30) auf einen Wert eingestellt ist, ab dem die ausströmende Druckluft im engsten Querschnitt des Luftaustritts der Feststellbremszylinder (25.1, 25.2) die Schallgeschwindigkeit erreicht.

6. Druckluftbremsanlage nach Anspruch 5, **dadurch gekennzeichnet, dass** der Umschaltdruck (p_{S}) des Umschaltventils (30) auf einen Wert im Bereich zwischen 1,9 × 10⁵ Pa und 2,5 × 10⁵ Pa einschließlich der Bereichsgrenzen eingestellt ist.

7. Druckluftbremsanlage nach einem der Ansprüche 4 bis 6, **dadurch gekennzeichnet, dass** der engste Querschnitt des Luftaustritts am ersten Ausgangsanschluss (41) des Umschaltventils (30) um den Faktor 1,1 bis 2,5 größer ist als der engste Querschnitt des Luftaustritts der Feststellbremszylinder (25.1, 25.2).

8. Druckluftbremsanlage nach einem der Ansprüche 1 bis 7, **dadurch gekennzeichnet, dass** der Speicherbehälter (31) über eine Verbindungsleitung (32) mit einem Ansaugbehälter (33) des Kompressors (2) verbunden ist, und dass in einer Saugleitung (43), über die der Ansaugbehälter (33) mit der Umgebung verbunden ist, ein in Richtung der umgebenden Atmosphäre sperrendes Rückschlagventil (34) angeordnet ist.

9. Druckluftbremsanlage nach einem der Ansprüche 1 bis 8, **dadurch gekennzeichnet, dass** die mit einem Schnellentlüftungsventil (29) und einem Umschaltventil (30) verbundenen Feststellbremszylinder (25.1, 25.2) an einem anhängerlosen Kraftfahrzeug und/oder an dessen Anhängerfahrzeug oder an dem hinteren Teil eines Gelenkbusses angeordnet sind.

## Claims

1. A compressed air braking system (DBA*) of a motor vehicle, which has a compressed air supply unit (1) with a compressor (2) and a plurality of brake circuits connected to the compressed air supply unit (1) via a multiple circuit protection valve (7), including at least one parking brake circuit with parking brake cylinders (25.1, 25.2), **characterized in that** the parking brake cylinders (25.1, 25.2) per wheel or per vehicle axle can each be vented via a rapid bleeder valve (29) connected to a connecting line (28) as well as a changeover valve (30) arranged downstream thereof alternately to the ambient atmosphere or to an additional reservoir (31).

2. The compressed air braking system according to claim 1, **characterized in that** the rapid bleeder valve (29) has an input port (35), a working port (36) and an output port (37), wherein the input port (35) is connected to the output port of a relay valve (24) controllable by a handbrake valve (23) via a pressure line (27), wherein the working port (36) is connected to the parking brake cylinders (25.1, 25.2) via the connecting line (28), and wherein the output port (37) is connected to an input port (40) of the changeover valve (30) via an output line (38) .

3. The compressed air braking system according to claim 1 and 2, **characterized in that** the changeover valve (30) is configured as a pressure controlled 3/2 way switching valve with a control pressure input (39), an input port (40) and two output ports (41, 42), the input port (40) of which is connected to the first output port (41) in the non-operating rest state and is connected to the second output port (42) in the switched state, wherein the control pressure input (39) is connected to the input port (40), the first output port (41) leads to the ambient atmosphere, and the second output port (42) is connected to the reservoir (31).

4. The compressed air braking system according to claim 3, **characterized in that** a valve spring (44) of the changeover valve (30) has such a spring rigidity and/or such a set preload that, below a predefined changeover pressure (ps) applied at the control pressure input (39), the input port (40) is connected to the first output port (41) and upon achieving or exceeding the changeover pressure (ps) is connected to the second output port (42).

5. The compressed air braking system according to claim 4, **characterized in that** the changeover pressure (ps) of the changeover valve (30) is set to a value beginning at which the outflowing compressed air in the narrowest cross-section of the air outlet of the parking brake cylinders (25.1, 25.2) reaches the speed of sound.

6. The compressed air braking system according to claim 5, **characterized in that** the changeover pressure (ps) of the changeover valve (30) is set to a value in the range between 1.9 × 10⁵ Pa and 2.5 × 10⁵ Pa including the boundaries.

7. The compressed air braking system according to any of claims 4 to 6, **characterized in that** the narrowest cross-section of the air outlet at the first output port (41) of the changeover valve (30) is greater by a factor of 1.1 to 2.5 than the narrowest cross-section of the air outlet of the parking brake cylinders (25.1, 25.2).

8. The compressed air braking system according to any of claims 1 to 7, **characterized in that** the reservoir (31) is connected to an intake container (33) of the compressor (2) via a connecting line (32), and **in that** a check valve (34) locking in the direction of the ambient atmosphere is arranged in a suction line (43), via which the intake container (33) is connected to the surroundings.

9. The compressed air braking system according to any of claims 1 to 8, **characterized in that** the parking brake cylinders (25.1, 25.2) connected to a rapid bleeder valve (29) and a changeover valve (30) are arranged at a trailerless motor vehicle and/or at its trailer vehicle or at the rear portion of an articulated bus.

## Revendications

1. Système de freinage à air comprimé (DBA*) d'un véhicule à moteur, qui présente un dispositif d'alimentation en air comprimé (1) avec un compresseur (2) ainsi que plusieurs circuits de freinage raccordés au dispositif d'alimentation en air comprimé (1) par l'intermédiaire d'une soupape de protection à circuits multiples (7), dont au moins un circuit de frein de stationnement avec des cylindres de frein de stationnement (25.1, 25.2), **caractérisé en ce que** les cylindres de frein de stationnement (25.1, 25.2) sont purgés par roue ou par essieu de véhicule respectivement par l'intermédiaire d'une soupape de purge rapide (29) raccordée à une conduite de liaison (28) ainsi qu'une soupape d'inversion (30) disposée en aval de celle-ci alternativement soit dans l'atmosphère ambiante soit dans un réservoir de stockage (31) supplémentaire.

2. Système de freinage à air comprimé selon la revendication 1, **caractérisé en ce que** la soupape de purge rapide (29) présente un raccord d'entrée (35), un raccord de travail (36) et un raccord de sortie (37), dans lequel le raccord d'entrée (35) est relié au raccord de sortie d'une soupape relais (24) pouvant être commandée par une soupape de frein à main (23) par l'intermédiaire d'une conduite de pression (27), dans lequel le raccord de travail (36) est relié aux cylindres de frein de stationnement (25.1, 25.2) par l'intermédiaire de la conduite de liaison (28), et dans lequel le raccord de sortie (37) est relié à un raccord d'entrée (40) de la soupape d'inversion (30) par l'intermédiaire d'une conduite de sortie (38).

3. Système de freinage à air comprimé selon la revendication 1 et 2, **caractérisé en ce que** la soupape d'inversion (30) est réalisée sous la forme d'une soupape de commutation à 3/2 voies commandée par pression avec une entrée de pression de commande (39), un raccord d'entrée (40) et deux raccords de sortie (41, 42), dont le raccord d'entrée (40) dans l'état de repos non actionné est relié au premier raccord de sortie (41) et dans l'état inversé au deuxième raccord de sortie (42), dans lequel l'entrée de pression de commande (39) est reliée au raccord d'entrée (40), le premier raccord de sortie (41) mène dans l'atmosphère ambiante, et le deuxième raccord de sortie (42) est relié au réservoir de stockage (31).

4. Système de freinage à air comprimé selon la revendication 3, **caractérisé en ce qu'**un ressort de soupape (44) de la soupape d'inversion (30) présente une rigidité de ressort telle et/ou une précontrainte réglée de telle sorte que le raccord d'entrée (40) au-dessous d'une pression d'inversion (p_{S}) prédéfinie, s'appliquant à l'entrée de pression de commande (39), est relié au premier raccord de sortie (41) et lorsque la pression d'inversion (ps) est atteinte ou dépassée, au deuxième raccord de sortie (42).

5. Système de freinage à air comprimé selon la revendication 4, **caractérisé en ce que** la pression d'inversion (p_{S}) de la soupape d'inversion (30) est réglée sur une valeur à partir de laquelle l'air comprimé s'échappant atteint la vitesse du son dans la section transversale la plus étroite de la sortie d'air des cylindres de frein de stationnement (25.1, 25.2).

6. Système de freinage à air comprimé selon la revendication 5, **caractérisé en ce que** la pression d'inversion (ps) de la soupape d'inversion (30) est réglée sur une valeur dans la plage comprise entre 1,9 × 10⁵ Pa et 2,5 × 10⁵ Pa, limites de plage incluses.

7. Système de freinage à air comprimé selon l'une quelconque des revendications 4 à 6, **caractérisé en ce que** la section transversale la plus étroite de la sortie d'air sur le premier raccord de sortie (41) de la soupape d'inversion (30) est plus grande du facteur 1,1 à 2,5 que la section transversale la plus étroite de la sortie d'air des cylindres de frein de stationnement (25.1, 25.2).

8. Système de freinage à air comprimé selon l'une quelconque des revendications 1 à 7, **caractérisé en ce que** le réservoir de stockage (31) est relié à un réservoir d'aspiration (33) du compresseur (2) par l'intermédiaire d'une conduite de liaison (32), et qu'un clapet antiretour (34) effectuant un blocage en direction de l'atmosphère ambiante est disposé dans une conduite d'aspiration (43), par l'intermédiaire de laquelle le réservoir d'aspiration (33) est relié à l'environnement.

9. Système de freinage à air comprimé selon l'une quelconque des revendications 1 à 8, **caractérisé en ce que** les cylindres de frein de stationnement (25.1, 25.2) reliés à une soupape de purge rapide (29) et une soupape d'inversion (30) sont disposés sur un véhicule à moteur sans remorque et/ou sur le véhicule tracté de celui-ci ou sur la partie arrière d'un bus articulé.
